# EUROPEAN PATENT APPLICATION

(11) **EP 3 932 642 A1**
(43) Date of publication of application: **05.01.2022**
(21) Application number: 20183874.5
(22) Date of filing: 03.07.2020
(51) Int. Cl.: B29B 17/02

(54) **DELAMINATION PRIMER FOR DEINKING**

(71) Applicant: Siegwerk Druckfarben AG & Co. KGaA, 53721 Siegburg (DE)
(72) Inventor: Bergman, Holger, 51570 Windeck (DE); Leineweber, Ralf, 53721 Siegburg (DE)
(74) Representative: Hepp Wenger Ryffel AG

(57) **Abstract**

The present invention is related to a primer composition for delaminating and optionally deinking of a substrate (2, 2'), wherein said primer composition comprises as a first binder component a component that has a polymeric backbone with pendent hydroxy and/or carboxy groups that have been esterified or ac-etalised or ketalised to such an extent that the first binder component has an acid value of 0 - 50 mg KOH/g or a hydroxyl value of 0 - 600 mg KOH/g, preferably 0 - 400 mg KOH/g, and as a modifying component a soft resin, so that a primer layer (3) prepared from said primer composition is dissolvable in an alkaline aqueous medium.

## Description

The present invention is related to the delamination and deinking of substrates, such as flexible packaging articles.

Due to increasing environmental concerns, the conventional approach of throwing away articles after use has to be replaced by approaches involving the recycling of the articles or materials making up those articles.

This applies especially to plastic articles. Articles made of plastic (i.e. synthetic polymers such as polyethylene (PE), polypropylene (PP) or polyethylene terephthalate (PET)) are extremely efficient for the purposes of flexible packaging. However, this advantage has led to an extreme use of plastic materials, and without efficient recycling the environmental pollution that can already be observed (e.g. pollution of the oceans) will increase. This includes increase health hazards due to micro-plastic waste entering into the environment. Moreover, the plastic waste is landfilled with the high risk of leaking into nature.

Unrecycled plastic material is currently largely incinerated, which is detrimental with respect to the amount of CO₂ released therewith and its contribution to global warming.

In some regions (e.g. the EU) regulations have been implemented requiring a certain recycling rate to be obtained until a certain point in time. Furthermore and independent from regulations, all major brand owners made commitments to increase the amount of recycled material in their products.

Accordingly, there is a need for efficient recycling concepts for plastic material.

With respect to printed articles, this imposes additional requirements. The recyclability of material and quality of recycled material should not be impaired by the printing inks applied thereupon. Extremely critical in this respect is the extrusion step during recycling where the material is processed at higher temperatures resulting in a deterioration of the recycled product quality due to the limited heat resistance of binders and/or pigments present in the printing ink layer. Furthermore, caused by the pigment in the printed layer, the recycled material is coloured and not transparent, which limits the area of application.

Accordingly, before recycling of laminated plastic articles such as flexible packaging products, it is necessary to delaminate the product and subsequently remove any ink layers and additional functional layers.

In US-2015/0 298 360 A1, a method for removing ink printed on a plastic film is described, wherein a printed material is first conditioned in a plunger in order to obtain a film free of impurities, and subsequently said film is ground and subjected to cleaning and washing steps using a cleaning system with a cleaning solution consisting of surfactants in water at basic pH. The method states to allow recovery of the cleaned film, the cleaning solution as well as of the pigments of the ink layer that was applied onto the film. While this method may be suitable on a lab scale, it is difficult to implement in an upscaled commercial process. Also, no delamination step is described.

In JP-2001/131484, a plastic film was described from which printed matters can be easily released and removed by a treatment with an aqueous solution when recycled, due to the provision of a releasing layer on its surface, on which releasing layer a printed matter is formed. The releasing layer is made of a material which becomes water-swellable or water-soluble by at least a neutralization treatment. The releasing layer comprises a releasing component which is a polymer or a copolymer containing 10-60 wt.% of a carboxylic group in the molecule. During the neutralisation treatment, the carboxylic groups of said component are converted into the respective carboxylate groups, which renders the releasing layer water soluble.

However, such releasing layers do not meet the requirement imposed on commercial plastic articles such as flexible packagings. In particular, they do not exhibit the necessary water sensitivity, so that on the one hand they are sufficiently water-resistant under normal conditions of use, but on the other hand dissolve sufficiently quickly (in less than 15 minutes) and to such an extent that the substrate from which the layer is released is sufficiently pure. Another aspect is the poor overprintability of such layers, resulting in problems like pinholes and unacceptable print quality. Furthermore, such releasing layers cannot be used in laminates, since the bond strength values required for lamination are not achievable with those layers.

It was the problem of the present invention to provide a possibility of improved delamination and deinking of laminated packaging structures.

The above problem is solved by the present invention.

In detail, the present invention is related to a primer composition for delaminating and optionally deinking of a substrate, wherein said primer composition comprises as a first binder component a component that has a polymeric backbone with pendent hydroxy and/or carboxy groups that have been esterified or acetalised or ketalised to such an extent that the first binder component has an acid value of 0 - 50 mg KOH/g or a hydroxyl value of 0 - 600 mg KOH/g, preferably 0 - 400 mg KOH/g, and as a modifying component a compound selected from the group consisting of a soft resin, a plasticizer, or combinations thereof, so that a primer layer prepared from said primer composition is dissolvable in an alkaline aqueous medium.

The present invention is especially related to laminates, i.e. laminated products. According to the present invention, the term "laminate" refers to a product that consists of a stack of layers, wherein one layer (an outermost layer or a core layer) is defined as substrate or substrate layer. For example, the substrate layer may be a plastic layer, preferably a transparent plastic layer. A laminate may also preferably comprise more than one of those substrate layers, most preferably as outermost layers, and in between these substrate layers there may be provided a printed layer or several printed layers. These intermediate printed layers are protected from environmental influences.

In such a laminate, the one or more printed layers are typically connected to a substrate layer via a primer layer and/or an adhesive layer. As opposed to overprint varnish layers which are applied onto the surface of a substrate layer, a primer layer and/or an adhesive layer in a laminate has to meet specific requirements with respect to adhesion, reduced brittleness (i.e. increased flexibility) and especially has to achieve a high bond strength value.

The terms "primer composition" and "primer layer" are known in the art and refer to a composition or layer made therefrom which is applied onto a surface of a substrate in order to provide said surface with the required properties for applying a printing layer thereupon. These required properties comprise, for example, good adhesion properties, so that the printing ink layer applied thereupon does not detach during normal operation conditions.

In accordance with the present invention, the primer composition is a specific primer composition that renders a primer layer made therefrom suitable for use in a laminate, i.e. it has good adhesion properties, reduced brittleness, and in particular high bond strength values can be achieved. Moreover, according to the present invention the specific primer composition renders a primer layer made therefrom suitable for delamination and optionally deinking. This involves characteristics such as very good solubility in an alkaline aqueous medium in combination with very good overprintability and water resistance.

According to the present invention, it was found that binder components which are too water-soluble (e.g. due to a very high content of free carboxylic acid groups, i.e. a high acid value like the binders described in JP-2001/131484) are not suitable as first binder components for the primer compositions of the present invention, since they do not meet the required criteria of overprintability and water resistance, as well as adhesion and bond strength value. Surprisingly, the primer compositions of the present invention provide an excellent balance between solubility in an alkaline aqueous medium and required good overprintability, adhesion, brittleness, bond strength and water resistance.

The primer layer according to the present invention consists of at least one binder component (here designated as first binder component), one or more solvents, and optionally additives such as waxes, additional binder components and adhesion promoters. The primer composition according to the present invention does not comprise any colorant.

According to the present invention, said primer composition comprises as a first binder component a component that has a polymeric backbone with pendent hydroxy and/or carboxy groups that have been esterified or acetalised or ketalised to such an extent that the first binder component has an acid value of 0 - 50 mg KOH/g or a hydroxyl value of 0 - 600 mg KOH/g, preferably 0 - 400 mg KOH/g.

According to one preferred embodiment of the present invention, the pendent hydroxy and/or carboxy groups are at least partly esterified under formation of water-degradable bonds. The term "water-degradable bond" designates a chemical bond that become hydrolysed in an alkaline aqueous medium having a pH value from more than 7 to 14, more preferably 7.5 to 12.5, at an elevated temperature of between 50 to 90°C, preferably 60 to 85°C, within a period of time in the range between 0 to 15 minutes, preferably 1 to 10 minutes, especially preferable 2 to 6 minutes. According to a particular preferred embodiment of the present invention, the primer compositions described herein contain water-degradable bonds to such an extent that a primer layer made therefrom and being present in a laminate is dissolved (i.e. delaminated) in aqueous 1% NaOH medium at 85°C in 20 minutes or less, for example 10 to 20 minutes, preferably in 15 minutes or less, for example 10 to 15 minutes, more preferably in 10 minutes or less, for example 1 to 10 minutes, and especially preferred in 5 minutes or less, for example 1 to 5 minutes. In case a printing ink layer is present on the primer layer, the delamination is accompanied by or followed by a deinking step, where the printing ink layer is removed from the primer layer. According to a particular preferred embodiment of the present invention, under the conditions described above for the delamination step, i.e. in aqueous 1% NaOH medium at 85°C, deinking proceeds simultaneously with the delamination or is terminated within a period of 15 minutes or less, preferably 10 minutes or less, especially preferred 5 minutes or less, after completion of the delamination step.

Accordingly, the present invention provides a fast and efficient method of delamination and optionally also deinking of a laminate, in one single treatment step.

The acid value is a known parameter that defines the number of free carboxylic acid groups in a chemical compound. It is typically determined by a titration of the substance to be examined with KOH. The amount of KOH (in mg) required for neutralisation of 1g of the substance to be examined is the acid value.

The hydroxyl value is a known parameter that defines the number of free hydroxy groups in a chemical compound. It is also typically expressed by the amount of KOH (in mg) equivalent to the number of hydroxy groups in 1 g of the substance to be examined. It may be determined, for example, by acetylation of the free hydroxy groups of a substance with acetic anhydride. After completion of the reaction, water is added, and the remaining unreacted acetic anhydride is converted to acetic acid and measured by titration with potassium hydroxide.

The first binder components of the primer composition of the present invention are characterized by a polymeric backbone with pendent hydroxy and/or carboxy groups that have been at least partly esterified, acetalised or ketalised. In other words, the backbone comprises side chains in which said ester bonds or acetal moieties or ketal moieties are present. Those side chains may be formed by hydroxy and/or carboxy groups directly attached to the backbone and being esterified, acetalised or ketalised by respective reaction partners such as carboxylic acids or alcohols, aldehydes or ketones. Alternatively, to the backbone of the binder components there may be attached side chains which at least at one position, preferably at their terminal end, may comprise hydroxy and/or carboxy groups being esterified, acetalised or ketalised by respective reaction partners such as carboxylic acids or alcohols, aldehydes or ketones. The backbone itself is preferably made of carbon-carbon bonds, but may also comprise hetero bonds.

According to a preferred embodiment of the present invention, said first binder component that is comprised in the primer composition has a polymeric backbone with water-degradable bonds in the form of pendent hydroxy and/or carboxy groups that have been at least partly esterified, i.e. it is a polyester, preferably selected from the group consisting of polyvinyl esters and polyacrylates.

Polyvinyl esters and their synthesis are known in the art. Generally, they are composed of vinyl alcohol units that are polymerised by a radical polymerisation mechanism, and wherein the hydroxy groups of the vinyl alcohol units have been converted into respective ester units. Preferably, the polyvinyl esters according to the present invention are defined by the following formula 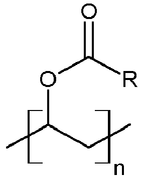 wherein
- R: is a linear or branched C₁₋₁₀ alkyl residue, preferably, CH₃, C₂H₅, C₃H₇, and C₄H₉, and
- n: is an integer from 10 to 100, preferably, 10 to 50.

According to the present invention, preferred polyvinyl esters are polyvinyl acetate, polyvinyl propionate, and polyvinyl butyrate. The polyvinyl esters to be used in the present invention may be fully esterified or esterified to such an extent that they have a hydroxyl value of 0 - 400 mg KOH/g.

According to a preferred embodiment of the present invention, the polyvinyl esters may be at least partially hydrolysed under the delamination and/or deinking conditions of the present invention described below.

Polyvinyl esters that are suitable for the primer composition of the present invention are commercially available. Examples are Vinnapas (Polyvinyl acetate) such as Vinnapas B100 SP and Elvanol, Poval and Excerval (partly hydrolysed polyvinyl acetate).

According to one embodiment of the present invention, as first binder component also polyvinyl esters may be used which are copolymers of a vinyl ester and an unsaturated carboxylic acid. This results in a copolymer having both ester groups and free carboxyl groups. As an unsaturated carboxylic acid, preferably an α,β-unsaturated carboxylic acid or an ester thereof may be used. According to a very preferred embodiment, a copolymer of vinylacetate and crotonic acid or an ester thereof is used.

According to another embodiment of the present invention, as first binder component also polyvinyl esters may be used which are copolymers of different vinyl esters. This results in a copolymer having different ester groups. According to a very preferred embodiment, a copolymer of vinyl acetate and vinyl laurate may be used.

Such copolymers and their synthesis are known in the art and commercially available. Examples are the Vinnapas C series (copolymer of vinyl acetate and crotonic acid) from Wacker, such as Vinnapas C 305, or Vinnapas B 100/200 VLE (copolymer of vinyl acetate and vinyl laurate).

Polyacrylates are known in the art. Generally, polyacrylates are composed of acrylic acid or methacrylic acid units that are polymerised by a radical polymerisation mechanism, and wherein the carboxyl groups of the acrylic acid or methacrylic acid units have been at least partially converted into respective ester units. Preferably, the polyacrylates suitable according to the present invention are defined by the following formula 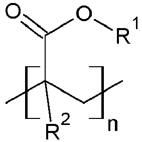 wherein
- R¹: is a linear or branched C₁₋₁₀ alkyl residue, preferably, CH₃, C₂H₅, C₃H₇, and C₄H₉, and combinations thereof,
- R2: is H or CH₃, and
- n: is an integer from 10 to 100, preferably, 10 to 50.

According to the present invention, also copolymers of acrylates or methacrylates with other monomers may be suitable as first binder component. As an example, a styrene-acrylate copolymer may be mentioned whose free carboxylic acid groups have at least been partially esterified.

The polyacrylates to be used in the present invention may be fully esterified or esterified to such an extent that they have an acid value of 0 - 50 mg KOH/g.

Polyacrylates that are suitable as first binder component for the primer composition of the present invention are commercially available. Examples are Degalan, Neocryl, Dianal, Elvacite, or PChem.

According to another preferred embodiment of the present invention, said first binder component that is comprised in the primer composition has a polymeric backbone with pendent hydroxy groups that have been acetalised or ketalised, i.e. it is an acetal or ketal.

Acetals and ketals are commonly prepared by reaction of an aldehyde or a ketone with hydroxy-containing molecules. Preferably, said hydroxy-containing molecule is a polyvinyl alcohol. Upon reaction with an aldehyde or ketone, respective acetals or ketals are formed. Preferably, the acetals or ketals according to the present invention are defined by the following formula 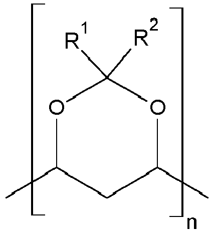 wherein
- R¹: is a linear or branched C₁₋₁₀ alkyl residue, preferably CH₃, C₂H₅, C₃H₇, and C₄H₉,
- R2: is H or a linear or branched C₁₋₁₀ alkyl residue, preferably CH₃, C₂H₅, C₃H₇, and C₄H₉, and
- n: is an integer from 10 to 100, preferably, 10 to 50.

Preferred examples are acetals where R¹=H and R²=H; R¹=CH₃ and R²=H; R¹=C₂H₅ and R²=H; or R¹=C₃H₇; R²=H. the latter compound is also known under the name polyvinyl butyral (commercially available under the trade name Mowital).

These compounds are typically not water-degradable. According to the invention, they therefore have a hydroxyl value of 50 - 600 mg KOH/g, preferably 100 - 400 mg KOH/g and especially preferred 200 to 400 mg KOH/g, in order to exhibit the required solubility in alkaline aqueous medium having a pH value from more than 7 to 14, more preferably 7.5 to 12.5, at an elevated temperature of between 50 to 90°C, preferably 60 to 85°C, within a period of time in the range between 0 to 15 minutes, preferably 1 to 10 minutes, especially preferable 2 to 6 minutes..

According to a preferred embodiment of the present invention, the first binder components of the primer composition have a weight average molecular weight MW of 20.000-150.000 g/mol, preferably 30.000 to 100.00 g/mol, and especially preferred 40.000 to 90.000 g/mol.

According to the present invention, said primer composition comprises as a modifying component a compound selected from the group consisting of a soft resin, a plasticizer, or combinations thereof. The presence of said modifying component ensures that the primer composition of the present invention provides for the adhesion, brittleness and high bond strength values that are necessary for use of said primer composition in a laminate.

According to the present invention, a soft resin is a polymer that has a glass transition temperature (Tg) of less than 20°C under ambient conditions.

Examples of suitable soft resins for the primer composition of the present invention are soft polyurethane resins such as Surkopak 5244 (a commercial product of a non-reactive polyurethane provided in ethyl acetate with a solids content of around 73-78%) .

Plasticizers are known in the art. According to the present invention, any plasticizer (monomeric or oligomeric) that is conventionally applied in printing ink layers may be used as a modifying component. Examples of plasticizers that are suitable as modifying component are diocytyl adipate (DOA), acetyl tributyl citrate (ATBC) or SAIB (sucrose acetate isobutyrate).

According to a preferred embodiment of the present invention, said first binder component(s) and modifying component(s) together are present in an amount from 30 to 60 wt.-%, preferably 40 to 50 wt.-%, based on the weight of the entire primer composition. In case a plasticizer is used as a modifying component, a fewer amount of modifying component is necessary than in a case where a soft resin is used as a modifying component.

According to a preferred embodiment of the present invention, said first binder component(s) and modifying component(s) are present in a ratio of first binder component to modifying component of 2:1 to 10:1, more preferably 3:1 to 5:1 in case a soft resin is used as a modifying component and 7:1 to 10:1 in case a plasticizer is used as a modifying component.

The primer composition according to the present invention may further comprise at least one additional binder component. Any binder components conventionally used in primer compositions may be used as additional binder component. Examples are nitrocellulose, polyesters, polyacrylates, ketonic resins, maleic resins or hard polyurethane resins. Preferably, the primer composition of the present invention comprises 10 to 60 wt.-%, more preferably 20 to 55 wt.-%, based on the weight of the entire primer composition, of said at least one additional binder component.

Said additional binder component does not have to be water-degradable. However, in order to provide the necessary water-degradability of the primer layer made from said primer composition, said first binder component should be present in an amount from 20 to 50 wt.-%, preferably 30 to 40 wt.-%, based on the weight of the entire primer composition.

The primer composition according to the present invention further comprises at least one solvent, or may be diluted with a solvent in order to adjust the viscosity before the printing process. The solvent is an organic solvent. Any organic solvent that is conventionally used in a primer or printing inks compositions may be used. Examples are esters such as ethyl acetate, n-propyl acetate, isopropyl acetate, or neopentyl acetate, or alcohols such as ethanol, n-propanol or isopropanol. Preferably, the primer composition of the present invention comprises 5 to 50 wt.-%, more preferably 10 to 40 wt.-%, based on the weight of the entire primer composition, of said at least one solvent. More preferably, the primer composition of the present invention is diluted with said at least one solvent in a ratio from 2:1 to 10:1, especially preferably 3:1 to 6:1.

The primer composition according to the present invention may further comprise one or more additives conventionally used in primer compositions. Examples are waxes such as polyethylene wax, additives for adjusting the coefficient of friction (COF) such as epoxidized soy oil, and adhesion promoters. Preferably, the primer composition of the present invention comprises 0 to 10 wt.-%, more preferably 0,1 to 5 wt.-%, based on the weight of the entire primer composition, of at least one additive.

It has been surprisingly found that a primer layer made from the above primer composition comprises, on the one hand, good overprintability, adhesion, brittleness, high bond strength values and sufficient stability (i.e. water resistance) under normal conditions of use, but on the other hand result in sufficiently quick delamination (in less than 20 minutes) and optionally deinking and to such an extent that the substrate from which the layer is released is properly pure for recycling.

The laminate (laminated product) of the present invention is characterized by the presence of a primer layer made from the primer composition described above.

According to a preferred embodiment, the laminate of the present invention comprises two substrate layers, and a primer layer applied to at least one surface of one of said substrate layers so that the primer layer is between said substrate layers, wherein said primer layer is made from a primer composition as described above.

The substrate layers of said laminate can be the same or different and any substrate such as a plastic substrate. Preferably, the substrate is a plastic substrate as conventionally used in the field of plastic laminates. Examples of suitable plastic substrates are polyethylene (PE), for example low density polyethylene (LDPE), polypropylene (PP), for example cast polypropylene (CPP), polyamide (PA) or polyethylene terephthalate (PET). These substrates may be coated with a metallization layer. For example, a substrate may be coated with a layer of a metal oxide such as aluminium oxide. An example is PP ALOX, which is a polypropylene substrate that has been coated with an aluminium oxide layer. Typically, such metallization provides for barrier properties.

According to a preferred embodiment of the present invention, said laminate further comprises a printing ink layer on a side of said primer layer that is not in contact with one of said substrate layers.

It is also possible to provide more than one printing ink layer onto the primer layer.

The ink layer (s) applied onto the primer layer may be made from any ink conventionally used in flexible packaging applications. Such an ink can be applied on the substrate by any standard technique, preferably by flexographic or gravure printing.

According to a preferred embodiment of the present invention, said laminate further comprises a barrier layer applied to at least one surface of one of said substrate layers to which no primer layer is applied, so that the barrier layer is between said substrate layers. Such barrier layers are known in the art. Preferably, said barrier layer is a gas impermeable or a gas resistant barrier layer. As an example, a barrier coating like an ethylene-vinylalcohol (EVOH) coating may be used for the purposes of the present invention.

Alternatively, instead of a barrier layer a further primer layer according to the present invention may be used. Either the barrier layer or the further primer layer constitute a layer that also becomes dissolved during the delamination and/or deinking treatment, so as to delaminate the respective substrate as well from other layers.

According to a preferred embodiment of the present invention, said laminate may further comprise an adhesive layer in order bind laminates formed on separate substrate layers with each other. For example, a first laminate may be formed by applying a barrier layer on a first substrate, and a second laminate may be formed by applying the primer composition according to the present invention onto a second substrate and then applying one or more printing ink layer onto the free surface of the applied primer layer. An adhesive layer may then be applied onto the free surface of the barrier layer, and then the laminates may be combined by a conventional lamination process using a conventional lamination machine. As a result, in said embodiment the adhesive layer in the final laminate is between the barrier layer described above and one printed layer. Adhesive layers are known in the art. For the purposes of the present invention, any adhesive layer conventionally used in laminates may be employed. As an example, polyurethanes which are used in combination with hardeners may be mentioned. Solvent-based, solvent-free and water-based polyurethanes can be used. An example of a suitable adhesive is a typical solvent-based 2K adhesive like Adcote 811H, preferably in combination with a typical hardener like 9L10 (both raw materials are commercially available from Rohm & Haas).

According to one embodiment the present invention, first a primer layer is applied onto one surface of a substrate, and at least one printed layer is applied onto the primer layer. This allows efficient delamination and deinking of said substrate, by dissolving the primer layer and thus removing the at least one printed layer that is arranged on said primer layer, from the substrate.

Thus, the present invention is also related to a method of making a laminated article as described herein, comprising the step of applying a primer composition as described herein onto a substrate.

The primer layer of the present invention can be applied onto the substrate by any conventional coating technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

The primer layer is applied, according to the present invention, onto the substrate in such an amount that a coating weight of 0.2-1.5 g/m², preferably 0.4-1.3 g/m², and especially preferred 0.6-1.0 g/m² is obtained.

The ink layer (s) applied onto the primer layer may be made from any ink conventionally used in flexible packaging applications. Such an ink can be applied on the substrate by any standard technique, preferably by flexographic or gravure printing.

According to a preferred embodiment of the present invention, on one surface of the other substrate layer, to which no primer layer is applied, there is provided at least one barrier layer by methods known in the art for applying barrier layers.

The substrate layer with the applied barrier layer can be combined with a number of layers comprising another substrate layer, the primer layer of the invention applied thereto, and at least one printing layer applied on the primer layer, by an adhesive layers, as described above.

The present invention is furthermore related to an article, comprising a laminated product as described above.

According to the present invention, said article is preferably a flexible packing.

Many articles such as food articles are stored in flexible packagings, i.e. packagings which are made of a material which shows some flexibility and can thus undergo certain modifications of its shape.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging).

Using the primer layer of the present invention, a substrate of a laminate can be quickly and efficiently delaminated and optionally deinked.

Thus, the present invention is also related to a method of delaminating and optionally deinking a laminated product as described above or an article as described above, comprising a step of treating the article in an alkaline aqueous medium so as to dissolve the primer layer that is present in the laminated product or on the article.

According to the present invention, said treatment step (herein also referred to as delamination and/or deinking) involves treatment of a laminate or article comprising said laminate with an alkaline aqueous medium having a pH value from more than 7 to 13, more preferably 7.5 to 12.5, preferably at an elevated temperature of between 50 to 90°C, preferably 60 to 85°C, within a period of time in the range between 0 to 20 minutes, preferably 1 to 15 minutes, especially preferable 2 to 5 minutes.

According to a preferred embodiment of the present invention, said alkaline aqueous medium comprises 0,1 to 5 wt.%, preferably 0,5 to 3 wt.-%, based on the entire weight of the aqueous medium, of a base, preferably an alkali or earth alkali hydroxide, such as sodium hydroxide (NaOH), potassium hydroxide (KOH), or lithium hydroxide (LiOH).

The alkaline aqueous medium also contains a surfactant. According to the present invention, any conventionally available surfactant may be used. Preferably, said alkaline aqueous medium comprises 0,1 to 5 wt.%, preferably 0,1 to 1 wt.-%, based on the entire weight of the aqueous medium, of a surfactant. Optionally, also a defoamer may be used in the same amounts as the surfactant.

It has been found that under those conditions delamination and optionally deinking occurs within a sufficiently short time. Preferably, said step of treating the printed article is conducted for a time in the range between 0 to 20 minutes, preferably 1 to 15 minutes, especially preferable 2 to 5 minutes.

The delamination and optionally deinking step of the present invention can be carried out in any conventional device. Preferably, said device is equipped with a heating unit and a stirring unit.

According to a preferred embodiment of the present invention, the laminate or article comprising said laminate to be delaminated and/or deinked is comminuted into smaller pieces before deinking is carried out. It has been found that smaller pieces can be delaminated and/or deinked more rapidly than larger pieces. The suitable size of the pieces to be delaminated and/or deinked depends on the nature of the laminate or article and can be easily optimised by a skilled person.

After delamination and optionally deinking, the substrate of the printed article of the present invention is substantially devoid of printing ink, i.e. there should not be any observable remaining printing ink on the substrate. Accordingly, the substrate that has been delaminated and optionally deinked according to the present invention can be readily recycled by any conventional recycling method in the art, e.g. melt extrusion.

According to a preferred embodiment of the present invention, also the printing ink that has been removed from the substrate during the deinking step according to the present invention can be recycled and reused, for example by separation from the delamination and/or deinking medium and subsequent separation of the pigment(s), e.g. by treatment with suitable solvents and centrifugation. Methods for separating pigments from a printing ink composition are known in the art.

Thus, the present invention is also related to the use of a primer composition as described above for the manufacture of a laminated product as described above that can be delaminated and optionally deinked by treatment with an aqueous medium.

The present invention will now be described below in more detail by reference to non-limiting figures and examples.
- Fig. 1: shows an illustration of a laminated product according to an embodiment of the present invention.
- Figs. 2a-c: show an embodiment of the delamination and optionally deinking process of the present invention.
- Fig. 3a: shows an example of a laminated product according to an embodiment of the present invention before the delamination and optionally deinking process.
- Fig. 3b: shows an example of a laminated product according to an embodiment of the present invention after the delamination and optionally deinking process.
- Fig. 4a: shows an example of a laminated product according to an embodiment of the present invention before and after the delamination and optionally deinking process was carried out for 5 min.
- Fig. 4b: shows an example of a laminated product according to a comparative example before and after the delamination and optionally deinking process was carried out for 35 min.

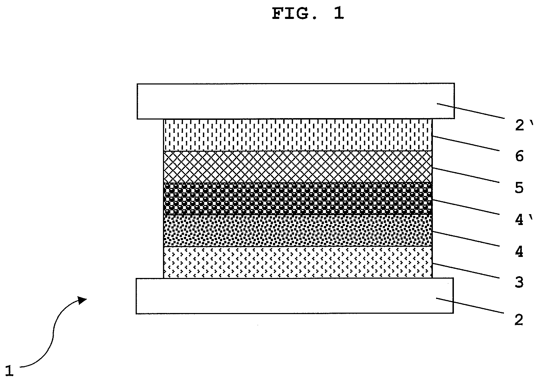

In Fig. 1 a laminated product 1 according to an embodiment of the present invention is shown. The laminated product 1 comprises a first substrate 2, e.g. a plastic substrate such as a PE, PP or PET, and a second substrate 2', e.g. a plastic substrate such as a PE, PP or PET. The first substrate 2 and the second substrate 2' may be of the same or a different material.

On one surface of said substrate 2, there is applied a primer layer 3 according to the present invention. On one surface of said primer layer 3 that is remote from the substrate 2, there is provided a stack of two printing ink layers 4 and 4'.

On one surface of said substrate 2', there is applied a barrier layer (or alternatively another primer layer according the present invention) 6. The stack of substrate 2' and barrier layer or primer layer according the present invention 6 is combined with the stack of substrate 2, primer layer 3 and printing layers 4, 4' via an adhesive layer 5.

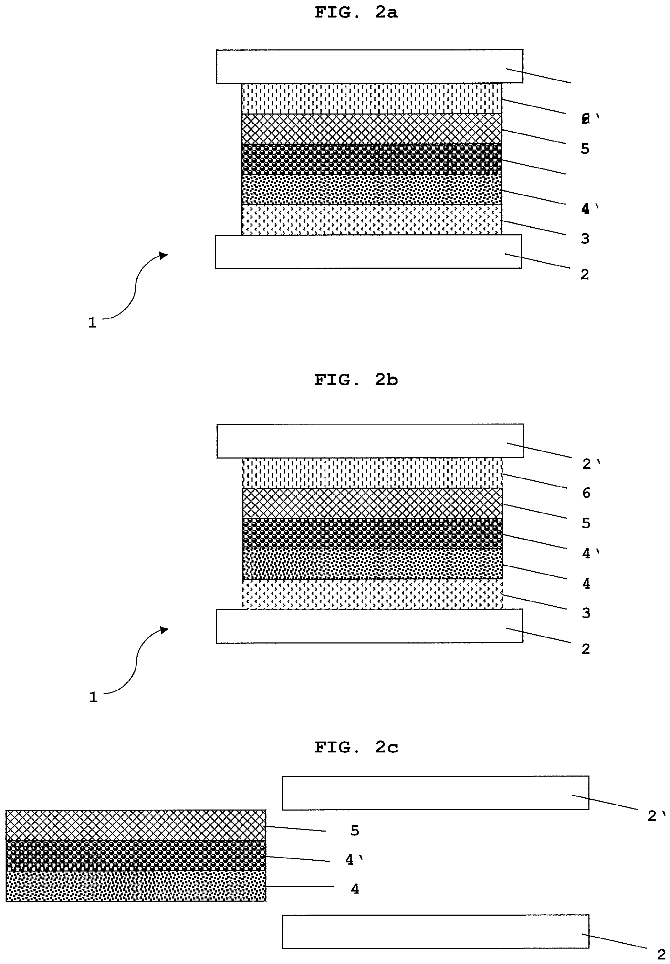

In Figs 2a to 2c, the delamination and optionally deinking process of the present invention is schematically illustrated. Same reference numbers designate same components as in Fig. 1. In Fig. 2a, as an example a laminated product 1 according to the embodiment of Fig. 1 is shown.

In Fig. 2a, the laminated product 1 before delamination and/or deinking is shown. In Fig. 2b, it is shown that during the delamination and optionally deinking step the primer layer 3 becomes dissolved (as illustrated by the dotted boundaries). Likewise, the barrier layer (or alternatively the primer layer according the present invention) 6 becomes dissolved (as illustrated by the dotted boundaries) . In Fig. 2c, it is shown that after the delamination and optionally deinking step the substrate 2 and the stack of printing ink layers 4, 4' and adhesive layer 5 is separated from the substrates 2, 2', and can be separately recycled.

### Example 1: Preparation of a first primer composition

The following components were added together under stirring, so as to result in a primer composition according to the present invention:

| **Component** | **Weight-%** |
|---|---|
| Nitrocelullose | 11,9 |
| Soft resin | 8 |
| PVA varnish | 13,1 |
| Hard resin | 2,9 |
| Epoxidized soybean oil | 0,7 |
| Ethyl acetate | 63,4 |

The soft resin was a polyurethane resin (with Tg < 20°C, MW < 20.000 g/mol and not film forming) in ethyl acetate. The PVA (polyvinyl acetate) varnish was a copolymer of vinyl acetate and crotonic acid. The hard resin was selected from the group consisting of a ketonic resin and an acrylic resin, or a combination thereof. The ethyl acetate was added to the composition so as to achieve a printing viscosity of 16 s using a DIN 4mm efflux cup.

### Example 2: Preparation of a second primer composition

The following components were added together under stirring, so as to result in a primer composition according to the present invention:

| **Component** | **Weight-%** |
|---|---|
| Nitrocelullose | 10,9 |
| Soft resin | 8 |
| PVA varnish | 13,1 |
| Hard resin | 4,6 |
| Epoxidized soybean oil | 0,7 |
| Ethyl acetate | 62,7 |

The soft resin was a polyurethane resin (with Tg < 20°C, MW < 20.000 g/mol and not film forming) in ethyl acetate. The PVA (polyvinyl acetate) varnish was a homopolymer of vinyl acetate. The hard resin was selected from the group consisting of a ketonic resin and an acrylic resin, or a combination thereof. The ethyl acetate was added to the composition so as to achieve a printing viscosity of 16 s using a DIN 4mm efflux cup.

### Example 3: Preparation of a third primer composition

The following components were added together under stirring, so as to result in a primer composition according to the present invention:

| **Component** | **Weight-%** |
|---|---|
| Nitrocelullose | 11,9 |
| Plasticizer | 4 |
| PVA varnish | 13,1 |
| Hard resin | 3,8 |
| Epoxidized soybean oil | 0,7 |
| Ethyl acetate | 66,5 |

The soft resin was a polyurethane resin (with Tg < 20°C, MW < 20.000 g/mol and not film forming) in ethyl acetate. The PVA (polyvinyl acetate) varnish was a homopolymer of vinyl acetate. The plasticizer was selected from the group consisting of diocytyl adipate and acetyl tributyl citrate, or a combination thereof. The hard resin was selected from the group consisting of a ketonic resin and an acrylic resin, or a combination thereof. The ethyl acetate was added to the composition so as to achieve a printing viscosity of 16 s using a DIN 4mm efflux cup.

### Example 4: Preparation of laminated product

The deinking primer compositions of examples 1 to 3 were each applied onto the corona-treated substrates indicated in the table 1 below. As printing inks, color and white inks (typical flexible packing lamination inks) were used.

The primer composition was printed on film 2 and film 1, respectively. A gravure Testacolor BTM-190 lab printing machine was used for all printing steps.

On top of the thus applied primer layer on film 1, color and white inks were successively applied, using also a gravure Testacolor BTM-190 lab printing machine.

For lamination of the printed films 1 and 2 to prepare duplex laminates, first 8 parts of a typical hardener (like 9L10) was added to a typical solvent-based 2K adhesive (like Adcote 811H; both raw materials supplied Rohm and Haas), followed by using a Labo Combi 400 lamination machine to apply the adhesive on film 1 and laminate it against film 2. For preparing triplex laminates additionally a film 3 was laminated to the duplex laminate consisting of film 1 and 2.

To ensure high bond strength values of the laminate and a proper through hardening, the laminate was stored at 40°C and 10 bar pressure for a period of at least 5 days before measuring the bond strength values with an Instron 5544 device. Required bond strength values were amongst others depending on the specific film used, but were in general higher than 1.5N/15mm and met application requirements.

### Comparative example 1: Preparation of comparative laminated product

A comparative laminated product was prepared as described in example 4, except that no primer layer was included into the laminate.

### Example 5: Delamination and Deinking

Following the APR Critical Issues Guidance Document for Sleeve Label Inks and PET Substrate Bottles test method, an alkaline aqueous medium was prepared by combining 98,75 wt.-% water, 1 wt.-% NaOH and 0,25 wt.-% of a surfactant (Triton X-100).

200 ml of said alkaline aqueous medium were heated to 65°C or 85°C, 0,8 g of the laminated products of example 4 and comparative example 1 were cut into pieces (about 20x20 mm), put into the caustic solution and stirred. After 15 minutes, the solution was filtered, and the treated cut pieces were washed with water. During the test, samples had been taken after every minute and inspected whether delamination and deinking had been taken place. The time required for delamination and the subsequent deinking (including the delamination time and therefore the deinking time is equivalent to the total process time) were recorded. For quality evaluation of delaminated and deinked samples the colorimetric ΔE-values were measured against the unprinted film as reference. A ΔE-value < 2.0 indicates full deinking of the sample, and the deinking step had been stopped upon reaching that value.

The results are shown in the following table:

| Primer example | Film 1 | Film 2 | Bond strength value [N/15mm] | Delamination time (min) | Deinking time (min) | ΔE |
|---|---|---|---|---|---|---|
| 1 | PE | PE | 2.2 | 9 | 12 | 2.1 |
| - (C1) | PE | PE | 2.2 | -* | -* | - |
| 2 | PP | PP | 2.6 | 14 | 16 | 1.1 |
| - (C1) | PP | PP | 2.7 | -* | -* | - |
| 3 | PP | PP | 2.6 | 15 | 17 | 1.4 |
| - (C1) | PP | PP | 2.7 | -* | -* | - |

| | | | | | | |
|---|---|---|---|---|---|---|
| PP: Polypropylene * : no Delaminaton and deinking after 40min | | | | | | |

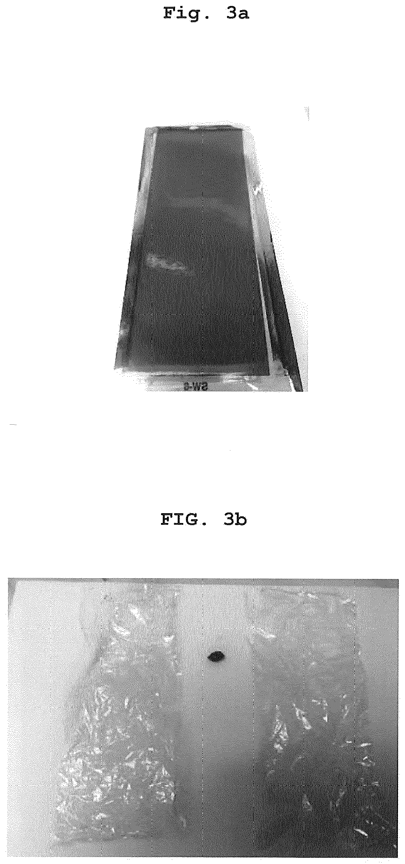

As can be seen in Figs. 3a and 3b, under conditions of 85°C for 12 min complete delamination and deinking of the substrates was achieved with the laminated product of example 4 (using the primer composition of example 1).

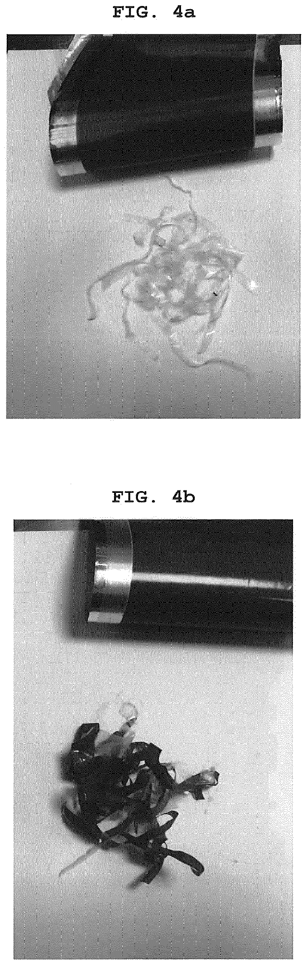

As can be seen in Fig. 4a, under conditions of 85°C for 12 min complete delamination and deinking of the substrates was achieved with the laminated product of example 4 (using the primer composition of example 1).

On the other hand, as can be seen in Fig. 4b, even under conditions of 85°C for 40 min no delamination and deinking of the substrates was achieved with the comparative laminated product of comparative example 1.

## Claims

1. A primer composition for delaminating and optionally deinking of a substrate (2, 2'), wherein said primer composition comprises as a first binder component a component that has a polymeric backbone with pendent hydroxy and/or carboxy groups that have been esterified or acetalised or ketalised to such an extent that the first binder component has an acid value of 0 - 50 mg KOH/g or a hydroxyl value of 0 - 600 mg KOH/g, preferably 0 - 400 mg KOH/g,
and as a modifying component a compound selected from the group consisting of a soft resin, a plasticizer, or combinations thereof,
so that a primer layer (3) prepared from said primer composition is dissolvable in an alkaline aqueous medium.

2. The primer composition according to claim 1, **characterized in that** the first binder component is selected from the group consisting of a vinyl ester homopolymer, preferably polyvinyl acetate, and a copolymer of a vinyl ester and an unsaturated carboxylic acid, preferably a copolymer of vinylacetate and crotonic acid.

3. The primer composition according to claim 1 or 2, **characterized in that** the soft resin is a polyurethane resin.

4. The primer composition according to claim 1 or 2, **characterized in that** the plasticizer is selected from the group consisting of monomeric plasticizers like diocytyl adipate and acetyl tributyl citrate, oligomeric plasticizers like SAIB (sucrose acetate isobutyrate), or a combination thereof.

5. The primer composition according to any of the preceding claims, wherein said first binder component and modifying together are present in an amount from 30 to 60 wt.-%, preferably 40 to 50 wt.-%, based on the weight of the entire primer composition.

6. The primer composition according to any of the preceding claims, further comprising at least one additional binder component and at least one solvent.

7. Laminated product (1) comprising two substrate layers (2, 2'), and a primer layer (3) applied to at least one surface of one of said substrate layers (2) so that the primer layer (3) is between said substrate layers (2, 2'), wherein said primer layer (3) is made from a primer composition according to any of claims 1 to 6.

8. Laminated product (1) according to claim 7, further comprising a printing ink layer (4) on a side of said primer layer (3) that is not in contact with one of said substrate layers (2, 2').

9. Laminated product (1) according to claim 7 or 8, further comprising a barrier layer (6), or alternatively a further primer layer (6) made from a primer composition according to any of claims 1 to 6, applied to at least one surface of one of said substrate layers (2, 2') to which no primer layer (3) is applied, so that the barrier layer (6) is between said substrate layers (2, 2').

10. Laminated product (1) according to any of claims 7 to 9, further comprising at least one additional layer selected from the group consisting of a printing ink layer (4') and an adhesive layer (5).

11. Article, comprising a laminated product (1) according to any of claims 7 to 10, preferably a flexible packing.

12. Method of delaminating and optionally deinking a laminated product (1) according to any of claims 7 to 10 or an article according to claim 11, comprising a step of treating the laminated product (1) or article in an alkaline aqueous medium so as to dissolve the primer layer (3) that is present in the laminated product (1) or on the article.

13. The method according to claim 12, **characterized in that** said alkaline aqueous medium comprises 0,1 to 5 wt.%, preferably 0,5 to 3 wt.-%, based on the entire weight of the aqueous medium, of a base, preferably an alkali or earth alkali hydroxide, such as sodium hydroxide, and a surfactant.

14. The method according to claim 12 or 13, **characterized in that** in said step of treating the laminated product (1) or said article said aqueous medium is heated to a temperature in the range from 50 to 90°C, preferably 60 to 85°C, preferably for a time in the range between 1 to 10 min, preferably 2 to 6 min.

15. Use of a primer composition according to any of claims 1 to 6 for the manufacture of a laminated product (1) according to any of claims 7 to 10 that can be delaminated and optionally deinked by treatment with an aqueous medium.
